# EUROPÄISCHE PATENTANMELDUNG

(11) **EP 1 731 878 A1**
(43) Veröffentlichungstag der Anmeldung: **13.12.2006**
(21) Anmeldenummer: 05450101.0
(22) Anmeldetag: 07.06.2005
(51) Int. Cl.: G01D 5/347

(54) **Maschinenführungselement mit kompensiertem Längenmesssystem**

(71) Anmelder: AMO Automatisierung Messtechnik Optik GmbH, 5280 Braunau am Inn (AT)
(72) Erfinder: Vasiloiu, Victor, 5280 Braunau am Inn (AT)
(74) Vertreter: Patentanwälte BARGER, PISO & PARTNER

(57) **Zusammenfassung**

Die Erfindung bezieht sich auf ein Maschinen führungselement, einerseits mit tragender Führungsfunktion, bestehend aus einem Führungsteil mit integrierter Maßverkörperung als dünnem flexiblem Streifen, die die Messinformation beinhaltet, und mit einem Schlitten, der linear relativ zum Führungsteil bewegbar ist, und in dem die Abtasteinheit des Längenmesssystems untergebracht ist.

Um die Mess- und Fübrungsfunktion vereinen und genaue und beliebig lange Positionierungen durchführen zu können, ist die Maßverkörperung längsverschiebbar im Führungsteil angeordnet und kann durch einen Spannmechaoismus für das Erreichen der vorbestimmten Montagefestigkeit und/oder für die Korrektur der Positioniergenauigkeit gestreckt werden.

## Beschreibung

Die Erfindung betrifft ein Maschinenelement, das zugleich Linearführungsfunktion und Längenmessfunktion besitzt.

Im Maschinenbau werden für Linearachsen zusätzlich zur Maschinenführung für die direkte Positionserfassung Längenmesssysteme verwendet, daher sind viele derartige Anordnungen bekannt, so beispielsweise:

Die US 3522568 A, die einen Transformator-Maßstab als Teil eines Längenmesssystemes auf einem flexiblem Metallstreifen beschreibt, der an einem Maschinenbett durch eine Spannvorrichtung angebracht wird und von einer Leseeinheit für die Positionserfassung abgescannt wird. Die hier dargestellte Lösung weist den Nachteil auf, dass das Maßband frei, parallel zu den Maschinenführungen, montiert wird. Die Durchbiegung, verursacht durch das Eigengewicht des Maßbandes, die Vibrationen und die im Maßband während einer möglichen, zum Maßstab lotrechten Bewegung, hervorgerufenen trägheitsbedingten Schwankung, machen die Lösung nur begrenzt einsetzbar. Der Aufwand für den Schutz dieses frei gespannten Bandes gegen Beschädigung und Verschmutzung ist auch beträchtlich.

Im DE 2712421 C2 wird ein Längenmesssystem auf optischer Basis beschrieben, wobei das Maßband als Metallstreifen in ein Profil gesteckt werden kann. Durch die notwendigen hohen Schutzmaßnahmen für das Messsystem mit optoelektronischer Abtastung wird das Maßband durch eine aufwändige Konstruktion in einem messsystemeigenen Hohlprofil, das zusätzlich auch eine Führungsfunktion nur für die Abtastelektronik erfüllt, eingebettet. Dieses Profil kann keine zusätzlichen Maschinenkomponenten führen und wird meistens parallel zu den klassischen mechanischen, lasttragenden Führungen angebracht. Üblicherweise wird das Hohlprofil aus technologischen Gründen aus Aluminium hergestellt. Um das thermische Verhalten des Messsystemes an das Maschinenbett, meistens aus Eisenlegierungen realisiert, anzupassen, werden aufwändige Entkopplungsmaßnahmen des Maßbandes vom Aluminiumprofil verwendet.

In der EP 1052480 B1 wird eine Längen-Messeinrichtung beschrieben, bei der in einem Maschinenführungselement eine Messskala durch zwei Fixierstellen mittels Laser- oder Widerstandpunktschweißung befestigt wird, wobei die Messskala zwischen den Festpunkten durch Dehnung gespannt wird. Der Nachteil dieser Messanordnung liegt darin, dass die Messskala fest mit einem einzigen Maschinenführungselement verbunden ist und dadurch eine Anwendung für längere Messbereiche, bei der die Führungselemente aneinander gereiht werden, nur bedingt möglich ist. Durch die werkseitige Messskala-Einarbeitung können keine montagebedingten Fehler der Führungsschiene und der Gesamtanlage durch die Messskalaspannung anwenderseitig kompensiert werden.

Die US 5842283 A beschreibt eine Messeinrichtung, bestehend aus einer magnetischen Messskala an einem Maschinen-Führungselement eingebaut und eine Abtasteinheit im Führungswagen integriert. Die Messskala laut dieser Patentschrift wird durch periodisch eingearbeitete elastische Formteile in die Führungsschiene geklemmt. Diese Montagelösung der Messskala in der Führungsschiene macht die Herstellung dieser sehr aufwändig und kann keine hohe Messgenauigkeit gewährleisten, da die Genauigkeit der Messskala durch die großen Maßabweichungen zwischen der Schienenbohrungen beeinträchtigt wird. Zusätzlich kann in dieser Ausführung keine Längenkompensation stattfinden.

Aus einem Präsentationsblatt vom April 2002 für das Produkt LMI-300 der FA. AMO GMBH in Braunau/Österreich ist eine Führungsschiene mit eingebauter Messskala bekannt, die auch für längere Messbereiche über die Länge einer einzigen Messschiene hinaus realisiert werden kann. In dieser Ausführung sind die einzelnen Messschienen sehr genau in einem aufwändigen Prozess in Länge gefertigt und in der Reihe montiert an den Verbindungsstellen durch Sonder-Positioniervorrichtungen gespannt, um eine Gesamtgenauigkeit der gesamten Messstrecke zu erreichen. In dieser Messanordnung ist eine Kompensation der Messabweichungen nach der Montage in der Anlage durch eine Anpassung der Skalenlage nicht möglich.

Es ist die Aufgabe der Erfindung, eine konstruktive Lösung eines Maschinenelementes vorzustellen, in dem die Mess- und Führungsfunktion vereint sind und das für genaue, theoretisch beliebig lange, Positionierungen geeignet ist.

Erfindungsgemäß werden diese Ziele dadurch erreicht, dass die Maßverkörperung längsverschiebbar im Führungsteil angebracht ist und durch einen eingebauten Spannmechanismus für das Erreichen einer nötigen Montagefestigkeit und/oder für die Korrektur der Positioniergenauigkeit gestreckt werden kann.

Die Lösung für ein Achsenkonzept, die ebenfalls präsentiert wird, ist platzsparend, vereinfacht wesentlich die Maschinenkonstruktion und damit verbundene Kosten und bietet die Möglichkeit über eine einfache Methode Messabweichungen zu korrigieren. Darüber hinaus ist die Austauschbarkeit des Längenmesssystems (Messskala) ohne großen Montageaufwand gegeben und das Nachrüsten mit dem Messsystem eines Maschinenführungselementes dieser Art ist durch geringe Vorbereitung möglich.

Die Erfindung wird im Folgenden an Hand der Zeichnung näher erläutert. Dabei zeigt
die Fig. 1 ein erfindungsgemäßes Führungselement,
die Fig. 2 eine Variante mit Detailansichten,
die Fig. 3 einen Maßstab in vergrößertem Maßstab,
die Fig. 4 und 5 Details,
die Fig. 6 eine Art Explosionsskizze und
die Fig. 7 und 8 schematische Längsschnitte.

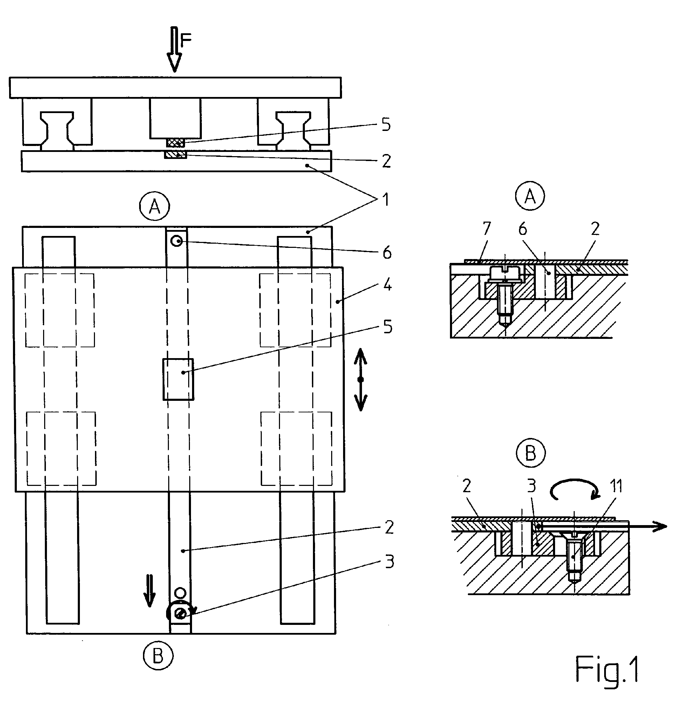

Das erfindungsgemäße Führungselement, das allgemein in der Fig.1 dargestellt ist, besteht aus einem Führungsteil (1), das eine von außen ausgeübte Kraft "F" über dem Schlitten (4) in einer relativ linearen Bewegung tragen kann, einer in diesem integriertem Maßstab (2) Maßstabspannvorrichtung (3), Schlitten (4), Messsystemabtasteinheit (5), Fixiervorrichtung (6) und gegebenenfalls aus einer Maßstabschutzfolie (7).

Das integrierte Längenmesssystem besteht aus einem Maßstab (Maßverkörperung) - als flexibler, dünner Streifen, der die Messinformation in inkrementaler, periodischer Form oder absolut kodiert trägt und einer Abtasteinheit, die bei einer relativen Bewegung in Messrichtung zu diesem Maßstab die Messinformation erfasst und an eine übergeordnete Auswerte- und/oder Steuerelektronik für Positionier- oder Regelungszwecke des Schlittens gegenüber Führung weiterführt.

Das physikalische Abtastprinzip des Längenmesssystems ist nicht relevant für die Erfindung, kann beliebig optoeletronisch (Auf- oder Durchlicht), kapazitiv, magnetisch oder induktiv sein und wird nach anderen anwendungsspezifischen Kriterien festgelegt.

Bevorzugt wird das induktive Abtastprinzip, das betreffend der Kombination von Genauigkeit und Robustheit am Besten den Anforderungen entspricht.

Das Maschinenführungselement trägt ohne jegliches Zwischenteil die Maßverkörperung (Maßstab, Messskala) des Messsystems und lässt durch eine eingebaute Spannvorrichtung (Fig. 1.3) die Streckung dieser für Korrekturzwecke zu. Der Schlitten (Fig. 1.4), als zweiter Teil des Führungssystems, befindet sich geometrisch verbunden in translatorisch relativer Bewegung zum Ersten und trägt die Abtasteinheit des Messsystems (Fig. 1.5).

Die Maßverkörperung wird in ihrer Herstellung im Absolutmaß kürzer realisiert. Diese Kürzung ist durch das Herstellverfahren hochgenau auf die gesamte Maßstablänge linear verteilt.

Die Montage der Maßverkörperung (Fig. 1.2) erfolgt in das Maschinenführungselement (Fig. 1.1), sodass mit einem seiner Enden mit der Unterlage fest verbunden ist (Fig. 1.6) und mit dem anderen über der Maßstabspannvorrichtung (Fig. 1.3) in Messrichtung relativ zur Unterlage gestreckt werden kann.

In einer ersten Ausführungsform verwendet die Maßstabspannvorrichtung (Fig. 1.3) für die Streckung der Maßverkörperung eine Umwandlung der Drehbewegung einer Einstellschraube mit keilförmiger Kopffläche, die über diese in Kontakt steht zu einer verschiebbaren Platine, die das Ende der Maßverkörperung klemmt, in eine Translation und zugleich kontrollierten Streckung.

Diese Streckung entspricht dem Absolutwert der Kürzung des Maßstabes und wird dem Anwender vom Hersteller angegeben. Wenn der Abtastkopf nahe der Spannvorrichtung relativ zum Führungsteil fest platziert und an eine Signalauswerteelektronik oder Positionswertanzeige angeschlossen wird, kann die Streckung des Maßstabes auf Grund der relativen Bewegung von Maßstab und Abtastkopf erfasst werden. Die Streckung des Maßstabes durch Drehung der Einstellschraube (11) wird so lange durchgeführt bis der angegebene Absolutwert erreicht ist.

Darüber hinaus kann durch das Streckverfahren nicht nur die nötige Montagespannung im Maßstab realisiert, sondern auch ein linearer Anlagenfehler kompensiert werden.

Es ist bekannt, dass durch eine Achs- bzw. Anlagenmontage geometrische Abweichungen zu Rechtwinkeligkeit, Parallelität und Geradheit auftreten. Diese Abweichungen führen zu Positionierungenauigkeiten. Falls diese Ungenauigkeiten für die Anwendung in ihrer Größe von Bedeutung sind, können diese entweder elektronisch in der Steuerung (wenn eine solche Korrekturfunktion zur Verfügung steht) oder durch eine gezielte zusätzliche Streckung im Maßstab des Messsystemes linear kompensiert werden.

Die Positionierabweichung wird festgestellt duech den Vergleich des angezeigten Werdes der Achse bei einer Positionierung (erfasst vom Messsystem) mit dem omologen Wert eines Referenznormales (Laserinterferometer, Endmasse, ...). Die festgestellte Abweichung wird durch die Streckung des Maßstabes kompensiert, sodass die zu kalibrierende Achse über das Messsystem den gleichen Wert anzeigt wie das Referenznormal. Eine wiederholte Kompensation der Achse nach möglichen konstruktiven Änderungen oder Belastungen oder Abnutzung ist nach dem o.g. Verfahren jederzeit realisierbar.

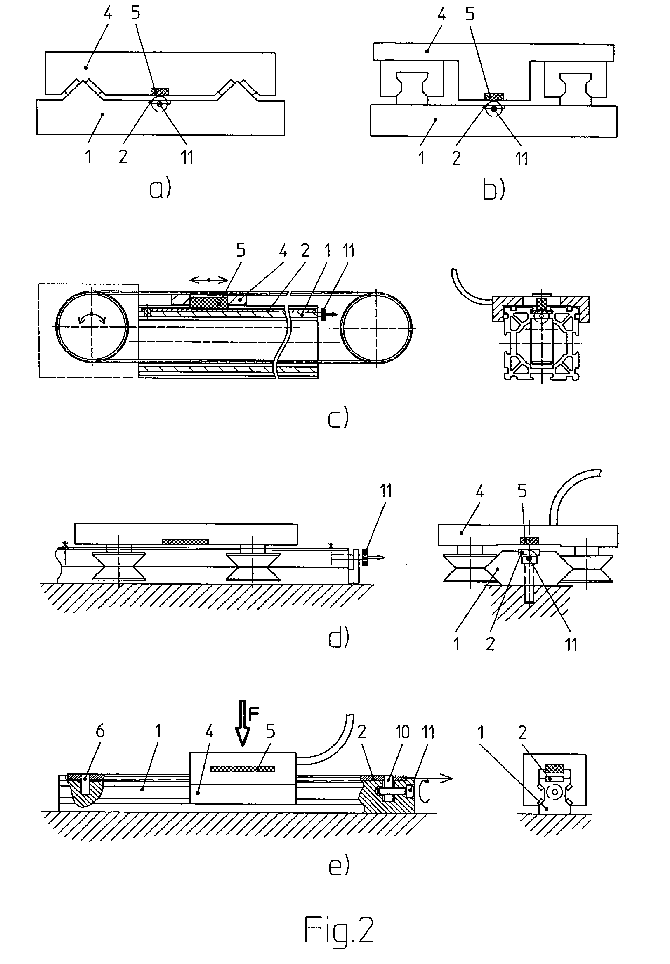

Fig. 2e stellt die bevorzugte Ausführung das Maschinenführungselement dar. Hier besteht der Führungsteil aus einer Führungsschiene 1, direktes Teil eines Linearlagers und aus einem Führungswagen 4. Die Führungsschiene trägt die eingebettete Maßverkörperung 2, die über die Spannstifte 10 und 6 gespannt wird. Der Führungswagen trägt die Abtasteinheit 5 des Messsystems und kann eine Krafteinwirkung von außen (mechanische Belastung jeder Art) in einer linearen Bewegung aufnehmen. Für alle Einrichtungen gemäß der Fig. 2a, b, c, d, e kann die Maßverkörperung über eine Einstellschraube (11) für Korrekturzwecke gestreckt werden.

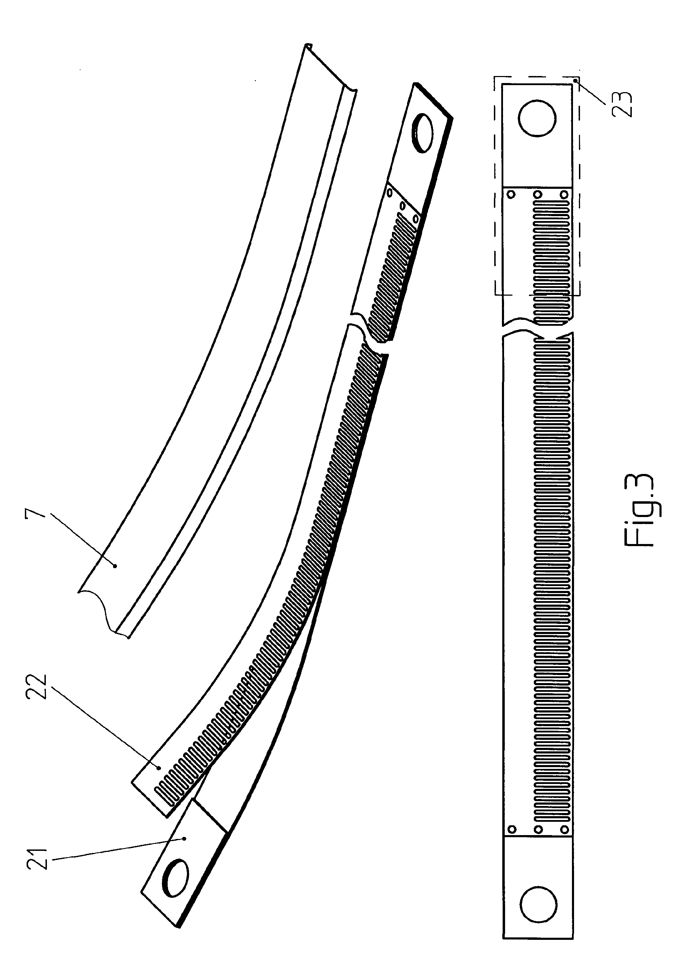

Die Maßverkörperung (Fig. 3) kann in einer bevorzugten Ausführung als Teil eines induktiven Längenmesssystemes, bestehend aus einem strukturiertem Maßband (Fig. 3.22) mit sehr genau eingeprägten Marken, die die Messinformation darstellen, und einem Trägerband, mit dem es durch Widerstands- oder Laserschweißung verbunden ist.

Das Trägerband schützt und stabilisiert mechanisch das Maßband, könnte für die Befestigung an dem Führungsteil Bohrungen aufweisen und isoliert induktiv das Maßband vom Untergrund. Dadurch wird die Abtastung der Maßverkörperung unabhängig in Form oder Materialeigenschaften von der Unterlagenbeschaffenheit.

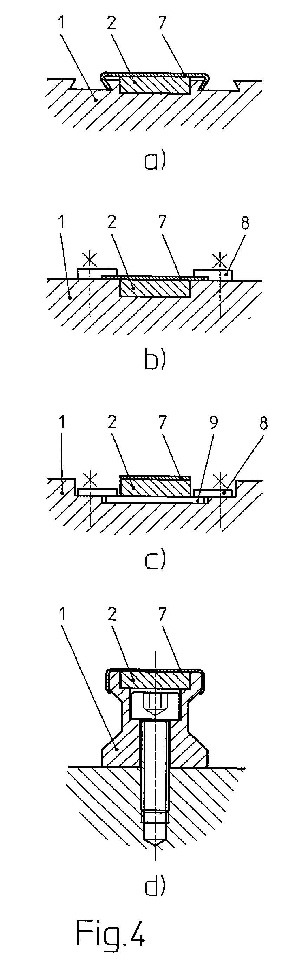

Die Montage der Maßverkörperung, wie in Fig. 4 dargestellt, erfolgt in einer im Führungsteil eingearbeiteten Nut und wird niedergehalten entweder durch eine Schutzabdeckung die durch ihrer Form auch eine Spannungsfunktion besitzt (Fig. 4a, 4d) oder durch zusätzliche mechanische Elemente (Nr. 8 in Fig. 4b, 4c).

In der bevorzugten konstruktiven Ausführung (Fig. 4d) ist das Führungsteil eine Profilschiene mit einer vorgesehenen Nut für die Maßverkörperung. Die Schiene wird an einer festen Unterlage angeschraubt, dann wird die Maßverkörperung wie beschrieben montiert und anschließend die Schutzabdeckung (7) durch einen Einrastmechanismus aufgeklippst.

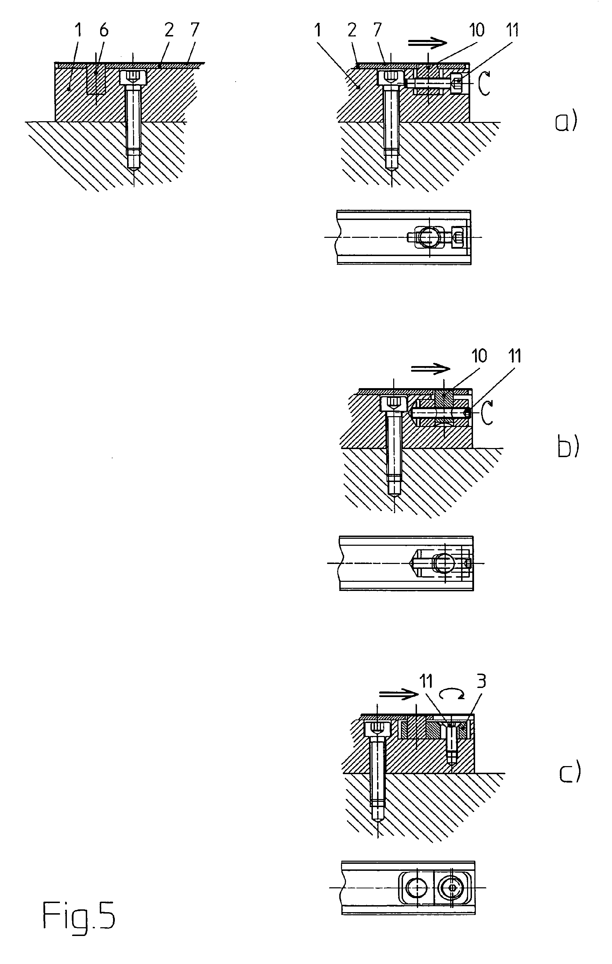

In Fig. 5 sind einige Lösungen für die Realisierung der Spannvorrichtung für die Maßverkörperung im Führungsteil als Beispiel präsentiert. Angenommen die Maßverkörperung weist an ihren Enden zwei Montagebohrungen auf, dann ist ein Ende durch den Stift 6 mit dem Führungsteil fest verbunden und das andere Ende durch den Stift 10 beweglich, sodass durch das Drehen einer Einstellschraube 11 (Fig. 5a, 5b, 5c) eine Streckung der Maßverkörperung erreicht wird.

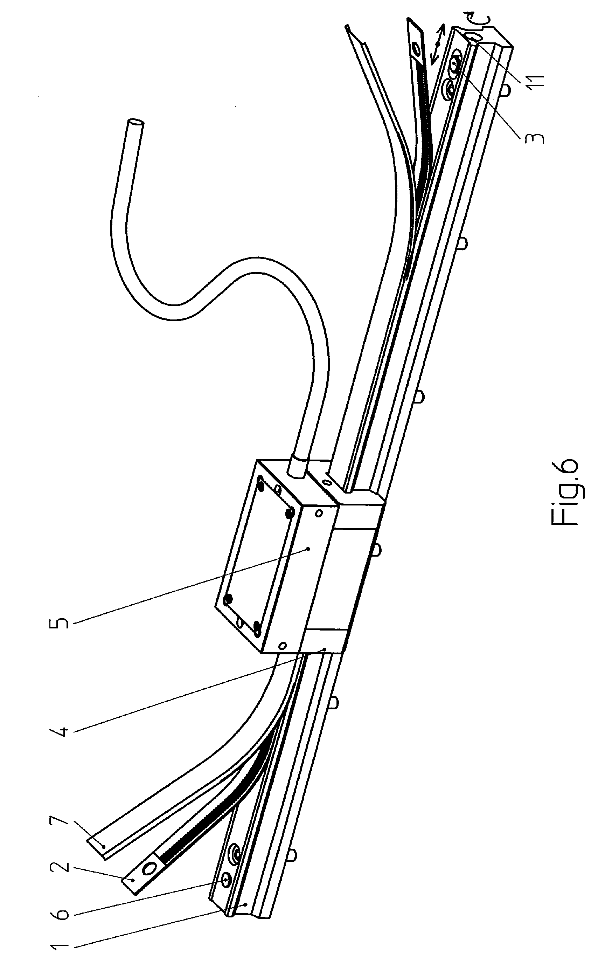

Die bevorzugten komplett konstruktiven Ausführung des Maschinenelementes gemäß der Erfindung ist in Fig. 6 dargestellt.

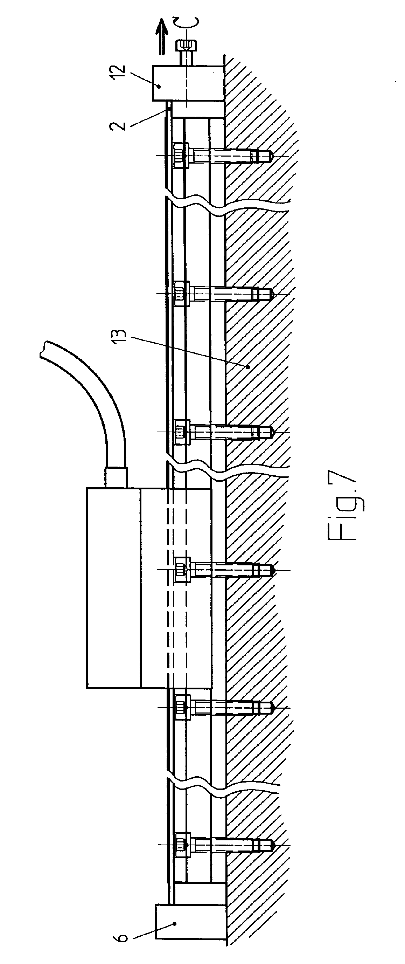

Falls durch thermische Verhalten an einer Anlage die Trennung der Maßverkörperung vom Führungsteil in ihren möglichen unterschiedlichen Ausdehnungen erwünscht wird, kann die Befestigung der Maßverkörperung über die Elemente 6 und 12, wie in Fig. 7, realisiert werden. Diese Elemente zwischen denen die Maßverkörperung gespannt wird, sind an einem dritten Maschinenteil 13 verbunden, das in dieser Anordnung die absolute Länge und Ausdehnung der Messskala bestimmt.

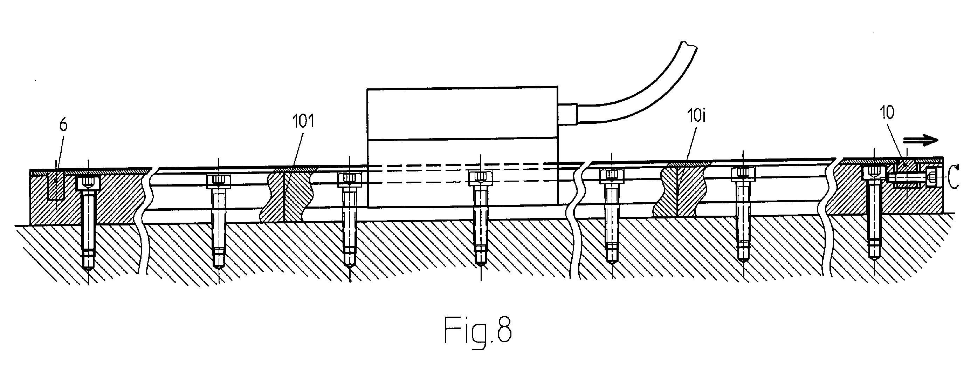

Die Maßverkörperung kann in Ihrem Herstellverfahren als dünnes Band theoretisch sehr lang erzeugt werden. Die Führungsteile als steife mechanische Komponenten sind in der Länge nur begrenzt realisierbar. Erfindungsgemäß besteht die Möglichkeit beliebig mehre Führungsteile nacheinander zu reihen, an einer Unterlage zu befestigen und mit einer einzigen Skala zu bestücken um so große geforderte Positionierstrecken zu erreichen (Fig. 8). Hier wurden die Führungsteil-Stoßstellen mit 101, ... 10i gekennzeichnet. Das erste und letzte Führungsteil tragen, wie bereits beschrieben, die Spannvorrichtung (6 u. 10) für die Maßverkörperung die in ähnlicher Weise montiert wird.

## Patentansprüche

1. Maschinenführungselement, einerseits mit tragender Führungsfunktion, bestehend aus einem Führungsteil mit integrierter Maßverkörperung als dünner flexibler Streifen, die die Messsinformation beinhaltet, und mit einem Schlitten, der linear relative zum Führungsteil bewegbar ist, und in dem die Abtasteinheit des Längenmesssystems untergebracht ist, **dadurch gekennzeichnet, dass** die Maßverkörperung längsverschiebbar im Führungsteil angeordnet ist und durch einen Spannmechanismus für das Erreichen der vorbestimmten Montagefestigkeit und/oder für die Korrektur der Positioniergenauigkeit gestreckt werden kann.

2. Maschinenelement nach Anspruch 1, **dadurch gekennzeichnet, dass** die Maßverkörperung durch eine abnehmbare Schutzfolie bzw. Abdeckung, die beliebig oft abgenommen und wieder montiert werden kann, geschützt ist.

3. Maschinenelement nach Anspruch 1 oder 2, **dadurch gekennzeichnet, dass** die zwei Enden der Maßverkörperung über die Spannelemente nicht direkt am Führungsteil befestigt sind, sondern für ein verbessertes Temperaturverhalten des Messsystems über einen zusätzlichen Träger, der die unterschiedlichen Ausdehnungskoeffizienten der Systemmaterialien ausgleicht, montiert sind.

4. Maschinenelement nach einem der voranstehenden Ansprüche, **dadurch gekennzeichnet, dass** das Führungsteil aus mehreren nacheinander gereihten Teilen besteht und dass die einteilige Maßverkörperung in der mehrteiligen Führung eingebracht ist.
